# EUROPEAN PATENT APPLICATION

(11) **EP 4 227 796 A1**
(43) Date of publication of application: **16.08.2023**
(21) Application number: 23152823.3
(22) Date of filing: 23.01.2023
(51) Int. Cl.: G06F 8/60, G06F 9/50, H04L 41/00

(54) **SERVICE DEPLOYMENT PROCESSING METHOD AND APPARATUS, ELECTRONIC DEVICE, AND STORAGE MEDIUM**

(30) Priority: 15.02.2022 CN 202210137223
(71) Applicant: BEIJING BAIDU NETCOM SCIENCE TECHNOLOGY CO., LTD., Beijing 100085 (CN)
(72) Inventor: TIAN, Xiaoning, Beijing, 100085 (CN)
(74) Representative: dompatent von Kreisler Selting Werner - Partnerschaft von Patent- und Rechtsanwälten mbB

(57) **Abstract**

The present disclosure provides a service deployment processing method and apparatus, an electronic device, and a storage medium, and relates to the technical fields such as cloud computing and service deployment. A specific implementation solution involves: acquiring dependencies among a plurality of service modules; and generating service deployment information of a project based on the dependencies among the plurality of service modules and preset project configuration information. According to the technology of the present disclosure, service deployment information of a project can be automatically generated, and then service deployment in the project can be automatically performed based on the generated service deployment information of the project, so as to effectively improve accuracy of service deployment and efficiency of service deployment.

## Description

### TECHNICAL FIELD

The present disclosure relates to the technical field of computers, particularly to the technical fields such as cloud computing and service deployment, and more particularly to a service deployment processing method and apparatus, an electronic device, and a storage medium.

### BACKGROUND

As a market size and user requirements continue to expand, a process of service establishment, deployment, operation and maintenance in private cloud environments becomes increasingly complex. Especially in the deployment of container orchestration on the cloud, a deployment process of a large number of cloud services is not only complicated and repetitive, but also excessively long, which may greatly increase a probability of errors.

For example, it is assumed that a project is required to be formed by a plurality of services. The services are required to be first deployed in a development environment, pass testing and then be deployed to a pre-online environment, and pass testing and then be deployed in a production environment. The same work is required to be repeated three times. During the deployment, dependencies among the services are generally manually recorded, and then manual deployment is performed based on a documented user manual.

### SUMMARY

The present disclosure provides a service deployment processing method and apparatus, an electronic device, and a storage medium.

According to one aspect of the present disclosure, a service deployment processing method is provided, including:
acquiring dependencies among a plurality of service modules; and
generating service deployment information of a project based on the dependencies among the plurality of service modules and preset project configuration information.

According to another aspect of the present disclosure, a service deployment processing apparatus is provided, including:
an acquisition module configured to acquire dependencies among a plurality of service modules; and
a generation module configured to generate service deployment information of a project based on the dependencies among the plurality of service modules and preset project configuration information.

According to yet another aspect of the present disclosure, an electronic device is provided, including:
at least one processor; and
a memory in communication connection with the at least one processor; wherein
the memory stores instructions executable by the at least one processor, and the instructions are executed by the at least one processor to enable the at least one processor to perform the method in the above aspect or any possible implementation.

According to still another aspect of the present disclosure, a non-transitory computer-readable storage medium storing computer instructions is provided, wherein the computer instructions are configured to cause a computer to perform the method in the above aspect or any possible implementation.

According to a further aspect of the present disclosure, a computer program product is provided, including a computer program, the computer program, when executed by a processor, cause the processor to perform the method in the above aspect or any possible implementation.

According to the technology of the present disclosure, service deployment information of a project can be automatically generated, and then service deployment in the project can be automatically performed based on the generated service deployment information of the project, so as to effectively improve accuracy of service deployment and efficiency of service deployment.

It should be understood that the content described in this part is neither intended to identify key or significant features of the embodiments of the present disclosure, nor intended to limit the scope of the present disclosure. Other features of the present disclosure will be made easier to understand through the following description.

### BRIEF DESCRIPTION OF THE DRAWINGS

The accompanying drawings are intended to provide a better understanding of the solutions and do not constitute a limitation on the present disclosure. In the drawings,
FIG. 1 is a schematic diagram according to a first embodiment of the present disclosure;
FIG. 2 is a schematic diagram according to a second embodiment of the present disclosure;
FIG. 3 is a schematic diagram of a service process layout of a project according to the present disclosure;
FIG. 4 is a schematic diagram according to a third embodiment of the present disclosure;
FIG. 5 is a schematic diagram of an interface of a pipeline according to an embodiment of the present disclosure;
FIG. 6 is a schematic diagram of state switching of a step according to an embodiment of the present disclosure;
FIG. 7 is a schematic diagram of state switching of a stage according to an embodiment of the present disclosure;
FIG. 8 is a schematic diagram of state switching of a pipeline according to an embodiment of the present disclosure;
FIG. 9 shows a state mapping table between a stages and a step according to an embodiment of the present disclosure;
FIG. 10 shows a state mapping table between a pipeline and a stage according to an embodiment of the present disclosure;
FIG. 11 is a schematic diagram according to a fourth embodiment of the present disclosure;
FIG. 12 is a schematic diagram according to a fifth embodiment of the present disclosure; and
FIG. 13 is a block diagram of an electronic device configured to implement the method according to an embodiment of the present disclosure.

### DETAILED DESCRIPTION OF EMBODIMENTS

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

Obviously, the embodiments described are some of rather than all of the embodiments of the present disclosure. All other embodiments acquired by those of ordinary skill in the art without creative efforts based on the embodiments of the present disclosure fall within the protection scope of the present disclosure.

It is to be noted that the terminal device involved in the embodiments of the present disclosure may include, but is not limited to, smart devices such as mobile phones, personal digital assistants (PDAs), wireless handheld devices, and tablet computers. The display device may include, but is not limited to, devices with a display function such as personal computers and televisions.

In addition, the term "and/or" herein is merely an association relationship describing associated objects, indicating that three relationships may exist. For example, A and/or B indicates that there are three cases of A alone, A and B together, and B alone. Besides, the character "/" herein generally means that associated objects before and after it are in an "or" relationship.

With the development of cloud computing, almost every enterprise plans to use or is using cloud computing today. Could modes used by the enterprises vary according to many different factors such as industry attributes and sizes. Currently, three cloud modes are mainly recognized: public cloud, private cloud, and hybrid cloud. At present, public cloud has reached a relatively saturated level in terms of a market size and later growth. In contrast, development and market recognition of a private cloud market have been significantly improved. In existing private cloud environments, services in projects are deployed manually, resulting in low service deployment efficiency.

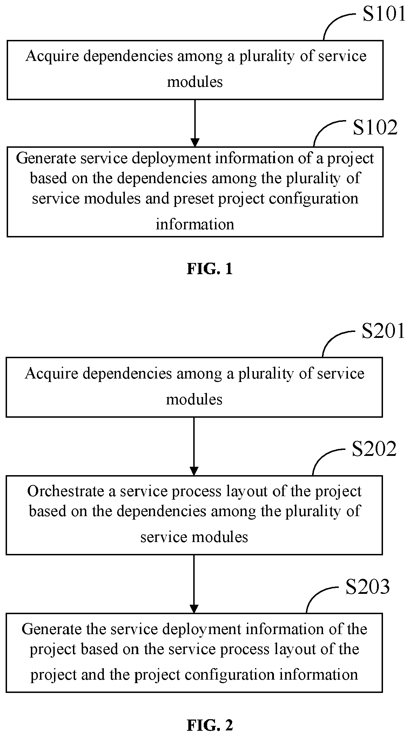

FIG. 1 is a schematic diagram according to a first embodiment of the present disclosure. As shown in FIG. 1, this embodiment provides a service deployment processing method, which may be applied to a service deployment processing apparatus, such as a computer device or a service deployment processing application running on a computer device. The method may specifically include the following steps.

In S101, dependencies among a plurality of service modules are acquired.

In S102, service deployment information of a project is generated based on the dependencies among the plurality of service modules and preset project configuration information.

The plurality of service modules in this embodiment may be a variety of functional modules respectively.

If operation of a service module A in the plurality of service modules is required to depend on a service module B, it may be specified in the dependencies among the plurality of service modules that the service module A depends on the service module B.

The dependencies among the plurality of service modules in this embodiment may be generated by a developer based on functions and operating conditions of the service modules. The dependencies among the plurality of service modules are inputted to a service deployment apparatus.

The preset project configuration information may be generated based on a requirement of the project and pre-stored in the service deployment apparatus.

In this embodiment, the service deployment information of the project may be automatically generated. In subsequent testing or delivery, all services of the project may be automatically deployed directly based on the service deployment information of the project, which requires no manual deployment and is very convenient to use.

According to the service deployment processing method in this embodiment, a service deployment processing apparatus can automatically generate service deployment information of a project based on dependencies among a plurality of service modules and preset project configuration information. Compared with the prior art, the service deployment information of the project can be automatically generated, and then service deployment in the project can be automatically performed based on the service deployment information of the project subsequently, which requires no manual deployment and can effectively improve accuracy of service deployment and efficiency of service deployment.

FIG. 2 is a schematic diagram according to a second embodiment of the present disclosure. As shown in FIG. 2, this embodiment provides a service deployment method, and further describes the technical solution of the present disclosure in more detail on the basis of the embodiment shown in FIG. 1. The method may specifically include the following steps.

In S201, dependencies among a plurality of service modules are acquired.

In S202, a service process layout of the project is orchestrated based on the dependencies among the plurality of service modules.

In S203, the service deployment information of the project is generated based on the service process layout of the project and the project configuration information.

In this embodiment, the plurality of service modules are service modules corresponding to a plurality of services to be deployed in the project.

For example, the orchestrating a service process layout of the project based on the dependencies among the plurality of service modules may include the following steps:
(1) laying out a process of the project into at least two service groups according to the dependencies among the plurality of service modules, each of the service groups including an ID of at least one of the service modules; and
(2) configuring a sequence between the at least two service groups to obtain the service process layout of the project based on the dependencies among the service modules in different service groups.

The service process layout of the project in this embodiment is used to define a process layout of all service modules in the project during installation.

For example, taking 6 service modules as an example, the dependencies among the plurality of service modules include: a service module B depending on a service module A, a service module D depending on the service module B, the service module D depending on a service module C, a service module F depending on the service module C, and the service module C depending on a service module E.

Based on the dependencies among the 6 service modules, IDs of the 6 service modules can be laid out in at least two service groups. For example, the layout is performed based on the dependencies among the service modules. During the layout, the service modules with dependencies cannot be classified into a same service group. Both the service module D and the service module F depend on the service module C, and no dependency exists between the service module D and the service module F. Therefore, the service module D and the service module F are in the same service group. The service module D depends on the service module B and the service module C, and no dependency exists between the service module B and the service module C. Therefore, the service module B and the service module C are in the same service group. The service module A and the service module E are basic modules and depended on by other modules, and no dependency exists therebetween. Therefore, the service module A and the service module E are in the same service group. A sequential relationship exists between different service groups.

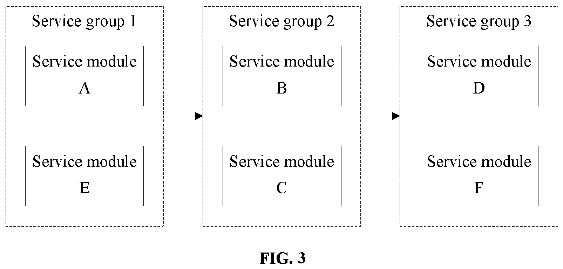

In the above manner, a schematic diagram of a service process layout of a project shown in FIG. 3 can be obtained. As shown in FIG. 3, in the service process layout of the project, the above 6 service modules may be classified into the above three service groups. Further, based on the dependencies among the service modules in different service groups, the service group where the service module A and the service module E are located may be arranged in a service group 1 ranked first, the service group where the service module B and the service module C are located may be arranged in a service group 2 ranked second, and the service group where the service module D and the service module F are located may be arranged in a service group 3 ranked third.

Optionally, in one embodiment of the present disclosure, visualized service deployment can be realized during the service deployment in this embodiment. That is, the entire service deployment process can be displayed in real time. For example, when the service process layout of the project is obtained, the service process layout of the project can be displayed for users to view the service process layout of the project in real time. Moreover, if necessary, the service process layout of the project can be modified.

It is to be noted that each service module may correspondingly be a software package. During the deployment in this embodiment, IDs corresponding to the service modules are laid out instead of operating the software packages. Therefore, in the service process layout of the project, what the service groups include are IDs of the service modules.

Further, in this embodiment, the preset project configuration information may include configuration information of the service modules in the project, which may specifically include a variety of installation information required to install the service modules such as operating parameters (e.g., environment parameters) of the service modules and service requirements for the service modules in the project. For example, in the configuration information of the service modules, operating requirements such as which service modules the service module is required to operate before may be defined according to the service requirements. In this way, in the service deployment information of the project, ranking of the service modules in the service groups in the service process layout of the project may be configured according to operating requirements of services in the project configuration information for the service modules. Specifically, different service modules configured in the same service group may be executed in parallel or in serial. Moreover, in the service deployment information of the project, a variety of information required for installation such as operating parameters of the service modules may be configured according to operating parameters of the service modules required by the services in the project configuration information.

That is, in this embodiment, the generated service deployment information of the project includes a process layout of all service modules in the project and is also configured with a variety of configuration information such as the operating parameters of the service modules. Automatic installation and configuration of all services in the project can be realized based on the service deployment information of the project.

According to the service deployment processing method in this embodiment, the service process layout of the project is orchestrated based on the dependencies among the plurality of service modules; and service deployment information of the project is generated based on the service process layout of the project and the project configuration information. In the entire process, the service deployment information of the project can be automatically generated, and then subsequent deployment can be automatically performed based on the service deployment information of the project, which requires no manual deployment and can effectively improve accuracy of service deployment and efficiency of service deployment.

It is to be noted that, according to the technical solution in the embodiment shown in FIG. 2, the service process layout of the project can be orchestrated based on the dependencies among the plurality of service modules. However, only a sequence between the service groups is defined in the obtained service process layout of the project. An execution sequence of the service modules in the same service group is not defined. In this case, it may be considered that different service modules in the same service group can be installed in parallel. However, in practical applications, in some scenarios, according to requirements of the services in the project, related ranking information such as which service modules a service module is required to operate before may be defined in the configuration information of the service, and then ranking of different service modules in the same service group may be determined. In this case, the service process layout of the project is required to be orchestrated based on the dependencies among the plurality of service modules and with reference to the project configuration information, so as to effectively improve accuracy of the service process layout of the project.

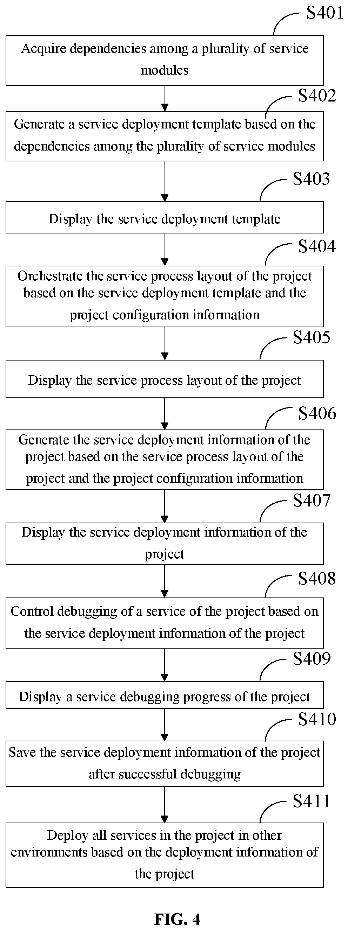

In addition, in another scenario, a service process layout may be orchestrated based on the dependencies among the plurality of service modules. However, service modules or service groups formed by a plurality of service modules to be skipped during service operation of the project are also defined in the project configuration information. Here, skipping service modules or service groups means that the service modules or service groups are not required to operate during service operation of the project. Therefore, in this case, the service process layout of the project is required to be orchestrated based on the dependencies among the plurality of service modules and with reference to the project configuration information, so as to improve accuracy of the service process layout of the project. The technical solution of the present disclosure is introduced in detail below by taking an embodiment in FIG. 4 as an example.

FIG. 4 is a schematic diagram according to a third embodiment of the present disclosure. As shown in FIG. 4, this embodiment provides a service deployment processing method, which may specifically include the following steps.

In S401, dependencies among a plurality of service modules are acquired.

In S402, a service deployment template is generated based on the dependencies among the plurality of service modules.

In S403, the service deployment template is displayed.

In S404, the service process layout of the project is orchestrated based on the service deployment template and the project configuration information.

In S405, the service process layout of the project is displayed.

For example, during specific implementation, step S402 may include the following steps:
(a1) laying out a process of the project into at least two service groups according to the dependencies among the plurality of service modules, each of the service groups including an ID of at least one of the service modules; and
(b1) configuring a sequence between the at least two service groups and generating the service deployment template based on the dependencies among the service modules in different service groups.

Different from step (2) in the embodiment shown in FIG. 2, the service deployment template is generated herein. The remaining implementations are the same as those in step (1) and step (2) in the embodiment shown in FIG. 2. Details may be obtained with reference to the related description in the above embodiment. For the service deployment template generated in this manner, the generation process is reasonable and the generated service deployment template is accurate.

Specifically, layout requirements of the project, such as specified service groups to be skipped or specified service modules to be skipped, may be defined in the project configuration information in this embodiment. In this case, specified service modules or service groups may be skipped in the service deployment template according to the project configuration information, so as to obtain the service process layout of the project.

In addition, optionally, related ranking information such as which service modules a service module is required to operate before may also be defined in the project configuration information, and different service modules in the service group can be ranked based on such ranking information.

Besides, a specified service module may also be moved to another service group based on the project configuration information.

Therefore, in step S404 in this embodiment, the orchestrating the service process layout of the project based on the service deployment template and the project configuration information may specifically include at least one of the following situations:
(a2) configuring, according to the project configuration information, a specified service group in the service deployment template as skipped to generate the service process layout of the project according to the project configuration information;
(b2) configuring, according to the project configuration information, a specified service module in the service deployment template as skipped to generate the service process layout of the project; and
(c2) configuring, according to the project configuration information, ranking of specified service modules in a specified service group in the service process layout of the project to generate the service process layout of the project.

In the above manner, accuracy of the generated service process layout of the project can be effectively improved.

In this embodiment, visualized service deployment can also be realized. For example, after the service deployment template is obtained in step S402, the service deployment template is immediately displayed in step S403. In this way, users can feel the entire service deployment process and view the generated service deployment template in a timely manner. In addition, the users can modify the service deployment template in a timely manner if the service deployment template is unreasonable. For example, after step S403, the method may further include: receiving a first modification instruction of a user, and modifying the service deployment template based on the first modification instruction of the user.

In addition, after the service process layout of the project is obtained in step S404, the service process layout of the project is also immediately displayed in step S405 for users to view in a timely manner. Similarly, the users can also feel the entire service deployment process and view the generated service process layout of the project in a timely manner. In addition, the service process layout of the project can also be modified in a timely manner when unreasonable. Similarly, after step S405, the method may further include: receiving a second modification instruction of the user, and modifying the service process layout of the project based on the second modification instruction of the user.

Step S402 and S404 are one specific implementation of orchestrating the service process layout of the project based on the dependencies among the plurality of service modules and with reference to the project configuration information.

In S406, the service deployment information of the project is generated based on the service process layout of the project and the project configuration information.

For example, during specific implementation of step S406, operating parameters of the project and the service modules are configured and the service deployment information of the project is generated according to the project configuration information.

In step S404, in the process of generating the service process layout of the project, when the service group or service module is configured as skipped, nodes in the service deployment template are operated, numbers and ranking of the service groups and the service modules in the service process layout of the project are changed, and an architecture in the service process layout of the project is affected. S406 focuses on static configuration. In a case that the architecture is determined, other information, such as operating parameters, is configured, and such configuration information is included in the service deployment information of the project, so that the service deployment information of the project includes not only the service process layout of the project, but also a variety of configuration information such as operating parameters of the project and the service modules, which is rich in content and can realize automatic deployment. In use, automatic installation and configuration of all services in the project can be realized based on the service deployment information of the project. A specific implementation process is the same as the implementation principle of step S203 in the embodiment shown in FIG. 2.

It is to be noted that the technical solution in the embodiment shown in FIG. 2 can be applied to service deployment in which a plurality of service modules are used for only one project. In addition, in practical applications, a plurality of service modules developed for a very large service system can be used in different projects to realize service deployment of different projects. For example, some projects may require only part of the plurality of service modules, while a plurality of service modules required in some projects are installed in a different order than that in other projects. For each project, service deployment of the project can be realized according to the process in the embodiment shown in FIG. 2. However, since all projects share a plurality of service modules, separate deployment of each module may reduce deployment efficiency.

In consideration of the above problem, a service deployment template may be pre-generated in this embodiment. Different projects may share the service deployment template. During each project deployment, the service process layout of the project can be quickly obtained by modifying the service deployment template according to the project configuration information. The service deployment process of the project is faster and more effective.

In S407, service deployment information of the project is displayed.

Different from the service process layout of the project displayed in step S405, configuration information such as operating parameters of the project and the service modules may also be displayed. For example, the service module may be clicked to view the configuration information of the service module from attribute information of the service module, which improves user experience and enables the service deployment information of the project to be viewed in a timely manner, so that the service deployment information of the project can be modified in a timely manner when unreasonable.

In S408, debugging of a service of the project is controlled based on the service deployment information of the project.

Optionally, in specific implementation of the step, the following situations may be included:
(a3) controlling start, pause, resume, or cancel of the debugging of the service of the project based on the service deployment information of the project; and/or
(b3) updating, in real time, states of the project, the service groups, and the service modules in the service groups in the service deployment information of the project during the debugging; and monitoring debugging of the service groups and the service modules according to the states of the service groups and the service modules; and/or controlling debugging of the service modules according to the states of the service groups and the service modules.

In this embodiment, during the debugging of the service of the project, the debugging is started after start is clicked. Then, during execution of the debugging, the debugging may be paused or resumed. Moreover, during the debugging, the debugging may be canceled. For example, in some cases, when the project is abandoned, the debugging can be canceled. Moreover, debugging of the service modules is controlled according to the states of the service groups and the service modules.

In this embodiment, by controlling the debugging of the service of the project, the debugging process is controllable, and debugging efficiency can be effectively improved. Unlike the related art, after the debugging starts, the debugging cannot be terminated until it ends or a problem arises. The process is not controllable. If problems arise frequently, the service module in the front of the process is debugged all the time, while the service module in the back has no chance to be debugged, resulting in low debugging efficiency.

In S409, a service debugging progress of the project is displayed.

In this embodiment, in order to realize flexible control over the debugging, states of the project, the service groups, and the service modules in the service groups in the service deployment information of the project can be updated in real time during the debugging. Moreover, debugging progresses of the service groups and the service modules can be monitored in real time according to the states of the service groups and the service modules. Further, when the state is abnormal, for example, an error occurs, the service modules can be controlled to be retried, skipped, or the like. For example, in the event of an error, the developer can modify program information of the service module and the configuration information of the project and retry.

Similarly, in this embodiment, during the debugging, the service debugging progress of the project is also displayed, so as to display the users the service debugging progress in real time.

In S410, the service deployment information of the project after successful debugging is saved.

In S411, all services in the project are deployed in other environments based on the deployment information of the project.

A project generally includes many service modules. During service debugging of the project, some service modules may fail to be installed, the service modules that fail to be installed are modified and retried, and so on. Such a discontinuous debugging process does not belong to successful debugging. Discontinuous debugging may lead to exceptions in the deployment of different service modules. Debugging performed only once and performed successfully based on the service deployment information of the project without any modification midway is called successful debugging, and the service deployment information of the project after successful debugging is saved.

When the project is delivered and deployed in a private cloud environment of a delivery party, installation packages of all service modules can be pre-stored locally and the service deployment information of the project can be acquired. All services in the project are deployed locally according to the service deployment information of the project. For example, the delivery party can log in to an account of a service deployment application and download previously saved service deployment information of the project from the account. Alternatively, the service deployment information of the project may also be acquired in other manners. Moreover, all services in the project are deployed based on the service deployment information of the project in an environment of the delivery party.

In the technical solution of this embodiment, the service deployment information of the project saved can be used multiple times. For example, the service deployment information of the project deployed and saved during the debugging may be directly used in deployment of a pre-online environment and deployment of a generation environment without re-deployment, which can effectively improve service deployment efficiency of the project. Moreover, the entire deployment process is automatic, convenient, and fast, requires no manual deployment, is at a high deployment speed, and has high accuracy, which can effectively shorten project delivery time and improve project delivery efficiency.

According to the service deployment processing method in this embodiment, different projects can share a service deployment template, which can effectively improve accuracy of service deployment and efficiency of service deployment. Also, debugging control can be supported, which improves debugging efficiency. Besides, project deployment in other environments can be supported based on the service deployment information of the project, which improves project delivery efficiency.

Switching of the states of the project, the service groups, and the service modules in the service deployment information of the project during the debugging is introduced in detail below.

A plurality of service modules are under a project. The service modules are the most basic execution units during the project deployment. A concept of pipeline is derived due to the dependencies among the service modules. That is, in this embodiment, a pipeline corresponds to a project, or is service deployment information of the project. Based on the service deployment information of the project, all service modules of the project can be installed according to a service process layout of the project. A step under the pipeline corresponds to a service module, which is also the most basic execution unit. A concept of stage is above the step, which corresponds to a concept of service group. Each stage includes at least one step.

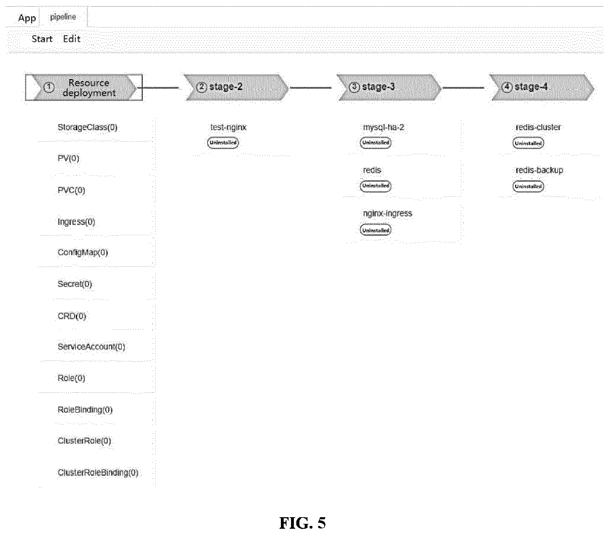

A service process layout of the project can be generated and displayed by using the above process of visualized service deployment. For example, a pipeline template interface may be edited. A large number of service modules are determined therein, and dependencies among service modules are determined based on a directed acyclic graph. Then, a number and a sequence of stages and steps included in each stage are determined. The stages are sequentially executed in serial. The steps included in one stage may be executed in parallel or in serial. That is, the steps included in the stage may be executed and installed in parallel or executed and installed in serial. FIG. 5 is a schematic diagram of an interface of a pipeline according to an embodiment of the present disclosure. As shown in FIG. 5, a service process layout of a project in service deployment information of the project is illustrated on the interface of the pipeline. As shown in FIG. 5, the pipeline includes a plurality of stages, with resource deployment as a first stage. Each stage includes one, two, or more steps (i.e., service modules). The service process layout of the project may also be modified based on a modification instruction of a user. For example, the steps may be dragged under the corresponding stage, and the steps under the stage are arranged in a column. A step under a stage may be dragged to change a sequence, or dragged under another stage, or deleted. The stages may be added and interchanged. The stages may also be named, and an execution sequence of all steps under the stage may be set to serial execution or parallel execution. A configuration state of the stage may be set to skipped, so as to be skipped when not required by the project, enabling the same pipeline template to deploy different project scenarios. Some custom service modules may also be put into stages, which may be installed on demand.

In the interface shown in FIG. 5, a visualized debugging process can be realized. Prior to debugging, each step may show "not installed". After start is clicked, a service installation process is entered. States of the steps, states of the stages, and a state of the pipeline can be viewed during the installation, and corresponding operations may be performed on the steps and the pipeline in some states to facilitate the debugging.

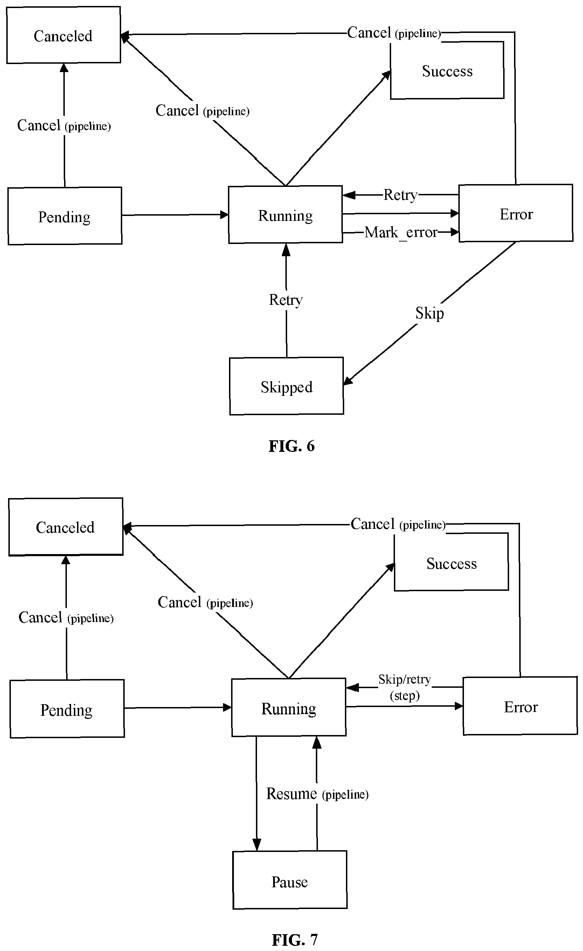

FIG. 6 is a schematic diagram of state switching of steps according to an embodiment of the present disclosure. As shown in FIG. 6, state of each service module (step) may include: pending, running, skipped, error, canceled, and success. In the debugging, operations that may be performed on a step include: retry, skip, and mark_error.

As shown in FIG. 6, the states shown are the states of the steps. Changes between different states are pointed by arrows, and in the case of automatic switching, there is no text on the arrows. That is, no specific operation is performed. In the case of a manual operation, a specific operation may be marked, which is text on the arrow.

For example, after it is detected that deployment of a pipeline is started, steps are installed based on stages from front to back according to a service process layout of a project in deployment information of the project. In each stage, the steps may be installed based on a sequence configured in the deployment information of the project. It is detected whether each step is being installed, if yes, the state of the step is set to running, and if no, the state of the step is set to pending. If the installation is completed, the state of the step is set to success. If the installation fails, the state of the step is set to error. If a step fails to be installed, the user can manually click retry to retry installation of the step. After the retry, the state of the step is running. If the step still fails to be installed after the retry, an error may be manually marked. For example, the user clicks attribute information of the step and enters an error mark different from an automatic installation error. A service deployment processing apparatus receives a modification instruction of the user and modifies the state of the corresponding step to mark_error. In this case, the user can check cause of the installation error of the step and, if necessary, modify program code or configuration of the service module corresponding to the step for further retry.

In addition, as shown in FIG. 6, for a failed step, if it is determined according to the configuration information of the project that non-installation of the step does not affect debugging of subsequent steps, the state of the step may also be set to skipped. After the whole process is completed, go back and debug the skipped step again. The debugging process is flexibly controlled.

The pipeline may also be canceled after being started. In this case, the state of the step successfully installed may be set to success, while the steps in pending and skipped states may be set to canceled.

FIG. 7 is a schematic diagram of state switching of stages according to an embodiment of the present disclosure. Stages correspond to service groups, which have states but no operations. As shown in FIG. 7, states of each stage may include: pending, running, skipped, error, canceled, pause, and success.

Since the stage has no corresponding operation, state switching is realized through the operation on a pipeline or step. As shown in FIG. 7, after it is detected that a pipeline, i.e., service deployment information of a project, is started, steps in each stage are installed based on stages from front to back according to a service process layout of the project in deployment information of the project. If it is detected that a step in a stage is being installed, the state of the stage may be set to running. If a step in a stage has not been installed, the state of the stage is set to pending. If all steps in a stage have been successfully installed, the state of the stage is set to success. If a step in a stage fails to be installed, the state of the stage is set to error. With reference to the retry or skip operation of the above step, the state of the stage corresponding to the step may be set to running or skipped.

In addition, if a step in a stage is being installed when the pipeline is paused, the state of the stage is set to pause. However, the step being installed in this stage continues to be installed until a final state becomes error or success, and subsequent stages and steps included therein may enter a pause state.

Similarly, after the pipeline is canceled, the state of the stage successfully installed may be set to success, while the stages in pending and skipped states may be set to canceled.

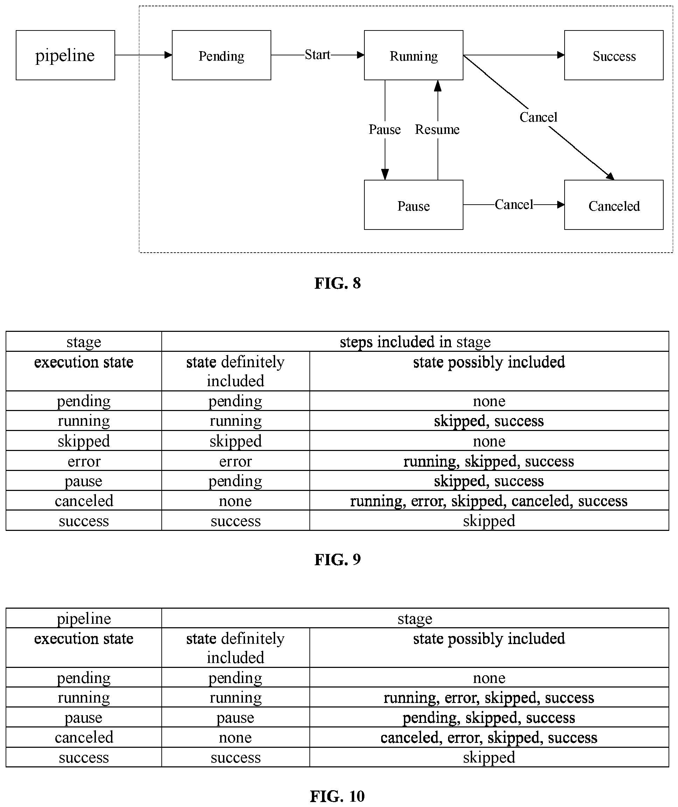

FIG. 8 is a schematic diagram of state switching of a pipeline according to an embodiment of the present disclosure. As shown in FIG. 8, states of the pipeline may include: pending, running, pause, canceled, and success. Operations that may be performed on the pipeline include: start, pause, resume, and cancel.

When the state of the pipeline is pending, after a pause operation is performed, a step being installed may continue to be executed to a final state. Steps executed after the step in the current stage and steps of stages after the stage may enter a pause state.

The states shown in FIG. 8 are the states of the pipeline. Changes between different states are pointed by arrows, and in the case of automatic switching, there is no text on the arrows. That is, no specific operation is performed. In the case of a manual operation, a specific operation may be marked, which is text on the arrow.

Based on the above, it can be known that the states of all the steps determine the state of the corresponding stage, and the states of all the stages determine the state of the pipeline. FIG. 9 shows a state mapping table between stages and steps according to an embodiment of the present disclosure. FIG. 10 shows a state mapping table between pipelines and stages according to an embodiment of the present disclosure.

Based on the above, it can be known that start is clicked on the interface of the pipeline shown in FIG. 5 to sequentially install all steps under each stage. During the installation, each step may display a current state in real time, and a corresponding operation may be executed based on each state. Corresponding to FIG. 6, in the case of automatic switching from a pending state to a running state, the running state continuously automatically switches to a success state if no error occurs. The running state may automatically switch to an error state if an error occurs. In the running state, a cancel operation or a mark_error operation may be executed to enter a canceled state or an error state. In the error state, a retry, cancel or skip operation may be performed to enter a running, canceled or skipped state. In the skipped state, a retry operation may be performed to enter a running state. If the installation process is not smooth, debugging can be performed easily.

A large project includes a plurality of services. If one execution has little chance to be success, some services may definitely be abnormally installed during the debugging. Through the above state switching and corresponding operations for corresponding states in this embodiment, the user can debug abnormal services in the pipeline to improve debugging efficiency.

For example, failed installation of the step indicates an error state. In this case, error information of a running state can be viewed in the interface of the pipeline, and corresponding configuration information of the service is modified based on the error information. Then, the step may be retried, and a subsequent installation process is performed to complete the debugging. Deployment and debugging of a K8S cluster are completed.

At the same time, during the installation, the state of the pipeline may also be displayed in real time. Corresponding to FIG. 8, a start operation is performed in a pending state to enter a running state. In the running state, if no error occurs, the state may automatically switch to a success state, and a pause or cancel operation is performed to enter a paused or canceled state. In the paused state, a resume or cancel operation is performed to enter a running or canceled state.

Until all the debugging is completed, the pipeline is completed, and a pipeline template, namely the service deployment information of the project, is saved, including the service process layout of the project and configuration information such as the operating parameters of the project and the service modules. Installation packages of all service modules are exported. Then, during the project delivery, the installation packages can be stored locally in a delivery environment and installed and deployed in the delivery environment based on the service deployment information of the project, which realizes rapid installation and, greatly improves the delivery efficiency and saves the delivery time.

For example, in practical applications, by use of the technical solution in the present disclosure, the service deployment information of the project can be generated in a development environment, and the service deployment information of the project can be debugged. That is, deployment is simulated. After the successful debugging, the service deployment information of the project is saved. Moreover, a deployment test is performed based on the saved service deployment information of the project in a pre-online environment. After the test is passed, the project is deployed in a customer's delivery environment based on the service deployment information of the project. Deployment may be performed multiple times based on service deployment information of one project, which is very convenient to use. Moreover, accuracy of the deployment and efficiency of the deployment can be ensured.

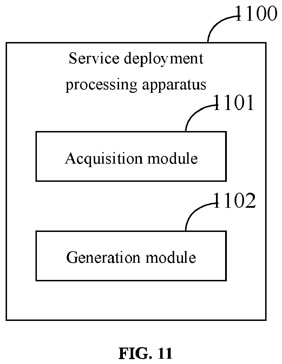

FIG. 11 is a schematic diagram according to a fourth embodiment of the present disclosure. This embodiment provides a service deployment processing apparatus 1100, including:
an acquisition module 1101 configured to acquire dependencies among a plurality of service modules; and
a generation module 1102 configured to generate service deployment information of a project based on the dependencies among the plurality of service modules and preset project configuration information.

An implementation principle and a technical effect of the service deployment processing apparatus 1100 in this embodiment realizing service deployment processing by using the above modules are the same as those in the above related method embodiment. Details may be obtained with reference to the description in the above related method embodiment, and are not described herein.

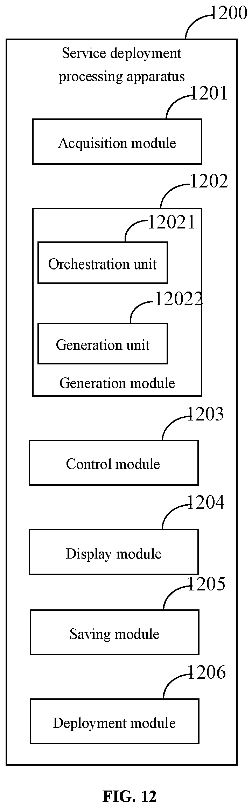

FIG. 12 is a schematic diagram according to a fifth embodiment of the present disclosure. This embodiment provides a service deployment processing apparatus 1200, including modules with the same names and the same functions as those in FIG. 11, i.e., an acquisition module 1201 and a generation module 1202.

As shown in FIG. 12, the generation module 1202 includes:
an orchestration unit 12021 configured to orchestrate a service process layout of the project based on the dependencies among the plurality of service modules; and
a generation unit 12022 configured to generate the service deployment information of the project based on the service process layout of the project and the project configuration information.

In one embodiment of the present disclosure, the orchestration unit 12021 is configured to:
orchestrate the service process layout of the project based on the dependencies among the plurality of service modules and with reference to the project configuration information.

In one embodiment of the present disclosure, the orchestration unit 12021 is configured to:
generate a service deployment template based on the dependencies among the plurality of service modules; and
orchestrate the service process layout of the project based on the service deployment template and the project configuration information.

In one embodiment of the present disclosure, the generation unit 12022 is configured to:
layout a process of the project into at least two service groups according to the dependencies among the plurality of service modules, each of the service groups including an ID of at least one of the service modules; and
configure a sequence between the at least two service groups and generate the service deployment template based on the dependencies among the service modules in different service groups.

In one embodiment of the present disclosure, the orchestration unit 12021 is configured to perform at least one of the following:
configuring, according to the project configuration information, a specified service group in the service deployment template as skipped and generating the service process layout of the project;
configuring, according to the project configuration information, a specified service module in the service deployment template as skipped and generating the service process layout of the project; and
configuring, according to the project configuration information, ranking of specified service modules in a specified service group in the service process layout of the project and generating the service process layout of the project.

The generating the service deployment information of the project based on the service process layout of the project and the project configuration information includes:
configuring, according to the project configuration information operating parameters of the project and the service modules and generating the service deployment information of the project.

As shown in FIG. 12, in one embodiment of the present disclosure, the service deployment processing apparatus 1200 further includes:
a control module 1203 configured to control debugging of a service of the project based on the service deployment information of the project.

In one embodiment of the present disclosure, the control module 1203 is configured to:
control start, pause, resume, or cancel of the debugging of the service of the project based on the service deployment information of the project; and/or
update, in real time, states of the project, the service groups, and the service modules in the service groups in the service deployment information of the project during the debugging; and monitor debugging of the service groups and the service modules according to the states of the service groups and the service modules; and/or control debugging of the service modules according to the states of the service groups and the service modules.

As shown in FIG. 12, in one embodiment of the present disclosure, the service deployment processing apparatus 1200 further includes: a display module 1204 configured to perform at least one of the following:
displaying the service deployment template;
displaying service deployment information of the project; and
displaying a service debugging progress of the project.

As shown in FIG. 12, in one embodiment of the present disclosure, the service deployment processing apparatus 1200 further includes: a saving module 1205 configured to save the service deployment information of the project after successful debugging.

As shown in FIG. 12, in one embodiment of the present disclosure, the service deployment processing apparatus 1200 further includes: a deployment module 1206 configured to deploy all services in the project in other environments based on the deployment information of the project.

An implementation principle and a technical effect of the service deployment processing apparatus 1200 in this embodiment realizing service deployment processing by using the above modules are the same as those in the above related method embodiment. Details may be obtained with reference to the description in the above related method embodiment, and are not described herein.

Acquisition, storage, and application of users' personal information involved in the technical solutions of the present disclosure comply with relevant laws and regulations, and do not violate public order and moral.

According to embodiments of the present disclosure, the present disclosure further provides an electronic device, a readable storage medium, and a computer program product.

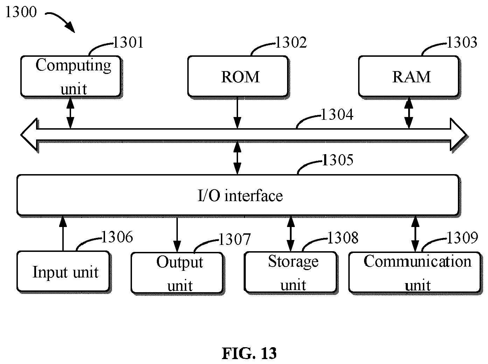

FIG. 13 is a schematic block diagram of an exemplary electronic device 1300 configured to implement an embodiment of the present disclosure. The electronic device is intended to represent various forms of digital computers, such as laptops, desktops, workbenches, PDAs, servers, blade servers, mainframe computers and other suitable computers. The electronic device may further represent various forms of mobile devices, such as PDAs, cellular phones, smart phones, wearable devices and other similar computing devices. The components, their connections and relationships, and their functions shown herein are examples only, and are not intended to limit the implementation of the present disclosure as described and/or required herein.

As shown in FIG. 13, the device 1300 includes a computing unit 1301, which may perform various suitable actions and processing according to a computer program stored in a read-only memory (ROM) 1302 or a computer program loaded from a storage unit 1308 into a random access memory (RAM) 1303. The RAM 1303 may also store various programs and data required to operate the device 1300. The computing unit 1301, the ROM 1302 and the RAM 1303 are connected to one another by a bus 1304. An input/output (I/O) interface 1305 is also connected to the bus 1304.

A plurality of components in the device 1300 are connected to the I/O interface 1305, including an input unit 1306, such as a keyboard and a mouse; an output unit 1307, such as various displays and speakers; a storage unit 1308, such as disks and discs; and a communication unit 1309, such as a network card, a modem and a wireless communication transceiver. The communication unit 1309 allows the device 1300 to exchange information/data with other devices over computer networks such as the Internet and/or various telecommunications networks.

The computing unit 1301 may be a variety of general-purpose and/or special-purpose processing components with processing and computing capabilities. Some examples of the computing unit 1301 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 1301 performs the methods and processing described above, such as the method in the present disclosure. For example, in some embodiments, the method in the present disclosure may be implemented as a computer software program that is tangibly embodied in a machine-readable medium, such as the storage unit 1308. In some embodiments, part or all of a computer program may be loaded and/or installed on the device 1300 via the ROM 1302 and/or the communication unit 1309. One or more steps of the method in the present disclosure described above may be performed when the computer program is loaded into the RAM 1303 and executed by the computing unit 1301. Alternatively, in other embodiments, the computing unit 1301 may be configured to perform the method in the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, speech input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN), and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the protection scope of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the protection scope of the present disclosure.

## Claims

1. A service deployment processing method, **characterized by** comprising:
acquiring (S101, S201, S401) dependencies among a plurality of service modules; and
generating (S102) service deployment information of a project based on the dependencies among the plurality of service modules and preset project configuration information.

2. The method of claim 1, wherein the generating (S102) service deployment information of a project based on the dependencies among the plurality of service modules and preset project configuration information comprises:
orchestrating (S202) a service process layout of the project based on the dependencies among the plurality of service modules; and
generating (S203) the service deployment information of the project based on the service process layout of the project and the project configuration information.

3. The method of claim 2, wherein the orchestrating (S202) the service process layout of the project based on the dependencies among the plurality of service modules comprises:
orchestrating the service process layout of the project based on the dependencies among the plurality of service modules and with reference to the project configuration information.

4. The method of claim 3, wherein the orchestrating the service process layout of the project based on the dependencies among the plurality of service modules and with reference to the project configuration information comprises:
generating (S402) a service deployment template based on the dependencies among the plurality of service modules; and
orchestrating (S404) the service process layout of the project based on the service deployment template and the project configuration information.

5. The method of claim 4, wherein the generating (S402) the service deployment template based on the dependencies among the plurality of service modules comprises:
laying out a process of the project into at least two service groups according to the dependencies among the plurality of service modules, each of the service groups comprising an ID of at least one of the service modules; and
configuring a sequence between the at least two service groups and generating the service deployment template based on the dependencies among the service modules in different service groups.

6. The method of claim 4 or 5, wherein the orchestrating (S404) the service process layout of the project based on the service deployment template and the project configuration information comprises at least one of the following:
configuring, according to the project configuration information, a specified service group in the service deployment template as skipped to generate the service process layout of the project;
configuring, according to the project configuration information, a specified service module in the service deployment template as skipped to generate the service process layout of the project; and
configuring, according to the project configuration information, ranking of specified service modules in a specified service group in the service process layout of the project to generate the service process layout of the project; and
wherein the generating the service deployment information of the project based on the service process layout of the project and the project configuration information comprises:
configuring, according to the project configuration information, operating parameters of the project and the service modules to generate the service deployment information of the project.

7. The method of any one of claims 1 to 6, further comprising: after generating (S102) service deployment information of the project based on the dependencies among the plurality of service modules and preset project configuration information,
controlling (S408) debugging of a service of the project based on the service deployment information of the project.

8. The method of claim 7, wherein controlling (S408) debugging of the service of the project based on the service deployment information of the project comprises:
controlling start, pause, resume, or cancel of the debugging of the service of the project based on the service deployment information of the project; and/or
updating, in real time, states of the project, the service groups, and the service modules in the service groups in the service deployment information of the project during the debugging; and monitoring debugging of the service groups and the service modules according to the states of the service groups and the service modules; and/or controlling debugging of the service modules according to the states of the service groups and the service modules.

9. The method of claim 7, further comprising at least one of the following:
displaying (S403) the service deployment template;
displaying (S407) service deployment information of the project; or
displaying (S409) a service debugging progress of the project.

10. The method of claim 7, further comprising: after controlling debugging of a service of the project based on the service deployment information of the project,
saving (S410) the service deployment information of the project after successful debugging.

11. The method of claim 10, further comprising: after saving (S410) the service deployment information of the project after successful debugging,
deploying (S411) all services in the project in other environments based on the deployment information of the project.

12. A service deployment processing apparatus(1100), **characterized by** comprising:
an acquisition module (1101) configured to acquire (S101, S201, S401) dependencies among a plurality of service modules; and
a generation module (1102) configured to generate (S102) service deployment information of a project based on the dependencies among the plurality of service modules and preset project configuration information.

13. An electronic device, comprising:
at least one processor; and
a memory in communication connection with the at least one processor; wherein
the memory stores instructions executable by the at least one processor, and the instructions are executed by the at least one processor to enable the at least one processor to perform the method of any one of claims 1 to 11.

14. A non-transitory computer-readable storage medium storing computer instructions, wherein the computer instructions are configured to cause a computer to perform the method of any one of claims 1 to 11.

15. A computer program product, comprising a computer program, the computer program, when executed by a processor, causing the processor to implement the method of any one of claims 1 to 11.
